# EUROPÄISCHE PATENTSCHRIFT

(11) **EP 0 930 423 B1**
(45) Veröffentlichungstag und Bekanntmachung des Hinweises auf die Patenterteilung: **19.03.2003**
(21) Anmeldenummer: 98123637.5
(22) Anmeldetag: 10.12.1998
(51) Int. Cl.: F02B 37/12, F02D 21/08, F02B 37/22, F02B 37/24

(54) **Vorrichtung zur Ladedruckregelung und Abgasrückführungsregelung bei einer Brennkraftmaschine, insbesondere einem Dieselmotor**
Device for controlling the boost pressure and the exhaust gas recirculation of an internal combustion engine, especially of a diesel engine
Dispositif de réglage de la pression d'admission et de recirculation des gaz d'échappement d'un moteur à combustion interne, notamment d' un moteur diesel

(30) Priorität: 16.01.1998 DE 19801395
(43) Veröffentlichungstag der Anmeldung: 21.07.1999
(73) Patentinhaber: DaimlerChrysler AG, 70567 Stuttgart (DE)
(72) Erfinder: Fausten, Hans, 73650 Winterbach (DE); Fekete, Nicholas Dr., 70734 Fellbach (DE); Mühleisen, Thomas, 73110 Hattenhofen (DE); Pischinger, Stefan Prof.Dr., 52076 Aachen (DE); Weber, Siegfried, 70619 Stuttgart (DE)

(56) Entgegenhaltungen:
- EP-A- 0 747 585
- WO-A-96/32583
- DE-C- 19 603 591
- GB-A- 2 083 135
- PATENT ABSTRACTS OF JAPAN vol. 1997, no. 03, 31. März 1997 (1997-03-31) & JP 08 296469 A (NISSAN MOTOR CO LTD), 12. November 1996 (1996-11-12)
- PATENT ABSTRACTS OF JAPAN vol. 1997, no. 02, 28. Februar 1997 (1997-02-28) & JP 08 270454 A (TOYOTA MOTOR CORP), 15. Oktober 1996 (1996-10-15)

## Beschreibung

Die Erfindung betrifft eine Vorrichtung zur Ladedruckregelung mittels eines Abgasturboladers mit variabel einstellbarem Turbinenquerschnitt und zur Abgasrückführungsregelung bei einer Brennkraftmaschine, insbesondere einem Dieselmotor, mit einem dem Verdichter des Abgasturboladers im Saugrohr vorgeschalteten Luftmassenmesser, mit einer die Abgasleitung mit dem Saugrohr verbindenden Abgasrückführungsleitung, und mit einer in einem ersten niedrigen Last- und/oder Drehzahlbereich die Abgasrückführung und in einem zweiten höheren Last- und/oder Drehzahlbereich den Ladedruck im Saugrohr durch entsprechende Variation des Turbinenquerschnitts regelnden Regeleinrichtung.

Bei einer aus der EP-A-0 747 585 bekannten Regeleinrichtung dieser Gattung wird im ersten niedrigeren Bereich der Ladedruck über ein Kennfeld gesteuert und im zweiten höheren Bereich dieser Ladedruck mittels der Kennfeldwerte als Sollwerte geregelt. Unabhängig davon wird im ersten Bereich die Abgasrückführung mittels eines Abgasrückführungsventils geregelt und im zweiten Bereich abgeschaltet.

Auch bei anderen bekannten Systemen werden zwei Regelkreise für die Abgasrückführung und den Ladedruck ausschließlich unabhängig voneinander eingesetzt, wobei der eine Regelkreis beim Betrieb des anderen ungeregelt, daß heißt rein gesteuert betrieben wird oder die zwei Regelkreise überscheiden sich und können sich gegenseitig beeinflussen (WO-A-9632583).

Darüberhinaus tritt insbesondere beim Dieselmotor das Problem auf, ausreichend große Abgasrückführungsraten über die zur Verfügung stehenden Abgasrückführungs-Strömungsquerschnitte realisieren zu können. Zur Lösung dieses Problems wird in bekannter Weise eine Drosselklappe zur Ansaugluftdrosselung und zur Erhöhung des Abgasrückführungs-Fördergefälles eingesetzt.

Die bekannte Anordnung, bei der sowohl eine Steuerung des Ladedrucks, wie auch eine Regelung des Ladedrucks neben der davon unabhängigen Regelung für die Abgasrückführung vorgesehen ist, führt zu einer relativ aufwendigen und kostenintensiven Lösung, wobei durch die unabhängige Regelung von Ladedruck und Abgasrückführung die Gefahr besteht, daß die beiden Systeme gegeneinander arbeiten und so zu unbefriedigenden Ergebnissen bezüglich Abgas und Leistung führen.

Der Erfindung liegt daher die Aufgabe zugrunde, eine Vorrichtung der eingangs genannten Gattung zu schaffen, die einfacher und kostengünstiger realisiert werden kann, und die in allen Betriebsbereichen zu sicheren und optimalen Werten von Abgas und Leistung führt.

Diese Aufgabe wird erfindungsgemäß dadurch gelöst, daß die Regeleinrichtung einen ersten Regler aufweist, der eine Stellgröße zur Variation des Turbinenquerschnitts aufweist, wobei die Führungsgröße zu Abgasrückführungsregelung im ersten niedrigen Last- und/oder Drehzahlbereich der Luftmassenstrom im Ansaugrohr und die Führungsgröße zur Ladedruckregelung im zweiten höheren Last- und/oder Drehzahlbereich der Ladedruck im Ansaugrohr ist.

Der Erfindungsgedanke nutzt in vorteilhafter Weise den variablen Turbinenquerschitt der Turbine des Abgasturboladers zur Erzeugung des notwendigen Abgasrückführungs-Fördergefälles bei gegebenem Abgasrückführungs-Strömungsquerschnitt. Die Regelung dieses variablen Strömungsquerschnitts führt somit zur Einstellung der geeigneten Abgasrückführungsraten. Im höheren Lastund/oder Drehzahlbereich muß lediglich die Führungsgröße Luftmassenstrom durch die Führungsgröße Ladedruck ersetzt werden, um auf eine Ladedruckregelung umzuschalten. Hierbei ist die Erkenntnis ausgenutzt, daß zur Erreichung der Ziele geringstmögliche Schadstoffemission bei gleichzeitig minimalem Kraftstoffverbrauch im niedrigen Last- und/oder Drehzahlbereich eine möglichst exakte Abgasrückführratenregelung und im oberen Lastund/oder Drehzahlbereich ein möglichst exakter eingeregelter Ladedruck Voraussetzung sind.

Durch die in den Unteransprüchen aufgeführten Maßnahmen sind vorteilhafte Weiterbildungen und Verbesserungen der im Anspruch 1 angegebenen Vorrichtung möglich.

Um auch noch im zweiten höheren Last- und/oder Drehzahlbereich neben der Regelung des Ladedrucks eine Abgasrückführungsregelung realisieren zu können, ist ein durch einen als Abgasrückführungsregler ausgebildeten zweiten Regler stellbares Abgasrückführungsventil in der Abgasrückführungsleitung vorgesehen. Dieser zweite Regler weist ebenfalls den Luftmassenstrom als Führungsgröße auf, wie dies bei der Regelung der Abgasrückführung durch den ersten Regler im ersten niedrigen Last- und/oder Drehzahlbereich der Fall ist.

Da der zweite Regler prinzipiell im ersten niedrigen Lastund/oder Drehzahlbereich nicht erforderlich ist, sind zweckmäßigerweise Mittel zum Abschalten oder Deaktivieren des zweiten Reglers beim Übergang vom zweiten in den ersten Bereich vorgesehen. Das Abgasrückführungsventil behält beim Abschalten oder Deaktivieren des zweiten Reglers vorzugsweise seinen aktuellen Stellwert und/oder sein aktuelles Stellsignal bei, wenigstens dann, wenn ein vorgebbarer applizierbarer Wert für den Stellwert oder das Stellsignal überschritten ist.

Wenn der erste Regler im ersten Last- und/oder Drehzahlbereich seine minimale Stellgröße erreicht, kann durch ihn die Abgasrückführung nicht mehr geregelt werden. Für diesen Fall sind in vorteilhafter Weise Mittel zum Abschalten oder Deaktivieren dieses ersten Reglers und gleichzeitigem Einschalten oder Aktivieren des zweiten Reglers vorgesehen.

Der Luftmassenmesser ist vorzugsweise als Heißfilmluftmassenmesser ausgebildet.

Die in der Abgasleitung angeordnete Turbine des Abgasturboladers weißt vorzugsweise eine Leitschaufelverstelleinrichtung zur Variation des Turbinenquerschnitts auf.

Zur Erfassung des Ladedrucks ist dem Verdichter des Abgasturboladers ein Drucksensor nachgeschaltet.

Zur Aufteilung des Betriebsbereichs in die beiden Last- und/oder Drehzahlbereiche ist vorzugsweise eine in Abhängigkeit der Motordrehzahl und der Motorlast (oder Einspritzung) stehende Kennlinie vorgesehen. Diese ist zweckmäßigerweise hysteresebehaftet, um im Grenzbereich ein Hin- und Herschalten zwischen den Bereichen zu verhindern.

Ein Ausführungsbeispiel der Erfindung ist in der Zeichnung dargestellt und in der nachfolgenden Beschreibung näher erläutert. Es zeigen:
- Figur 1: eine schematische Darstellung eines mit einem Abgasturbolader versehenen Dieselmotors mit Abgasrückführung, und
- Figur 2: ein Diagramm zur Erläuterung der beiden Lastund/oder Drehzahlbereiche.

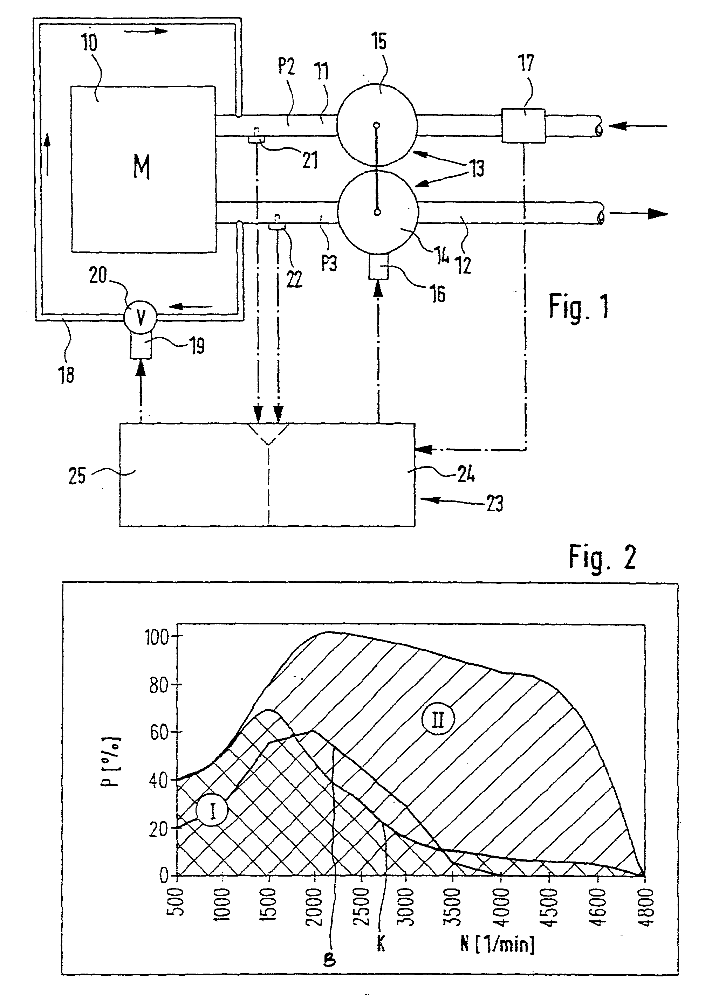

Bei dem in Figur 1 dargestellten Ausführungsbeispiel ist ein schematisch dargestellter Dieselmotor 10 in üblicher Weise mit einem Ansaugrohr 11 für die Luft und einer Abgasleitung 12 zum Ableiten der Abgase versehen. Ein Abgasturbolader 13 besteht aus einer in der Abgasleitung 12 angeordneten Turbine 14, die einen im Ansaugrohr 11 angeordneten Verdichter 15 antreibt. Die Turbine 14 besitzt in nicht näher dargestellter Weise eine Leitschaufelverstelleinrichtung um den Turbinenquerschnitt und die Turbinenleistung variieren zu können. Zur Einstellung und zur Betätigung der Leitschaufelverstelleinrichtung dient ein elektrisches oder pneumatisches Stellglied 16. Anstelle einer Leitschaufelverstelleinrichtung kann prinzipiell auch eine andere bekannte Einrichtung zur Variation des Turbinenquerschnitts treten.

Die in das Ansaugrohr 11 angesaugte Luft durchströmt zunächst einen Luftmassenmesser 17 zur Erfassung des angesaugten Luftmassenstroms. Dieser Luftmassenmesser 17 ist zweckmäßigerweise als Heißfilmluftmassenmesser ausgebildet und dem Verdichter 15 des Abgasturboladers 13 vorgeschaltet.

Die Abgasleitung 12 ist über eine Abgasrückführungsleitung 18 mit dem Ansaugrohr 11 verbunden. In diese Abgasrückführungsleitung 18 ist ein durch ein elektrisches oder pneumatisches Stellglied 19 steuerbares Proportionalventil 20 geschaltet. Dieses als Abgasrückführungsventil dienende Proportionalventil wird im Falle eines elektrischen Stellglieds 19 mit einer Steuerspannung angesteuert, deren Tastverhältnis zwischen 0 und 100 % variiert werden kann.

Zur Erfassung des Ladedrucks P2 ist zwischen Verdichter 15 und Dieselmotor 10 ein erster Drucksensor 21, während ein zweiter Drucksensor 22 in die Abgasleitung 12 zwischen den Dieselmotor 12 und der Turbine 14 zur Messung des Drucks P3 vor der Turbine 14 angeordnet ist.

Die für den Dieselmotor 10 erforderliche und übliche Kraftstoffeinspritzanlage ist zur Vereinfachung nicht dargestellt.

Eine elektronische Regeleinrichtung 23 steuert die Stellglieder 16 und 19 zur Leitschaufeleinstellung und zur Einstellung des Proportionalventils 20, wobei dieser elektronischen Regeleinrichtung 23 die Messwerte des Luftmassenmesser 17 und der Drucksensoren 21, 22 zugeführt werden. Diese elektronische Regeleinrichtung kann Bestandteil einer zentralen Motorelektronik oder Fahrzeugelektronik sein.

Der Grundgedanke der erfindungsgemäßen Regelung besteht darin, daß zunächst der gesamte Betriebsbereich des Dieselmotors 10 gemäß Figur 2 durch eine Kennlinie K in zwei Bereiche I und II unterteilt wird, wobei der Bereich I einen ersten niedrigen Last- und/oder Druckzahlbereich und der Bereich II einen zweiten höheren Last- und/oder Drehzahlbereich darstellt. Diese applizierbare Kennlinie K ist hysteresebehaftet und steht in Abhängigkeit von der Motordrehzahl N und der Motorlast P. Anstelle der Motorlast kann auch die Einspritzmenge vorgesehen sein. Dabei ist die Überlegung zugrunde gelegt, daß im doppelschraffierten Bereich I (niedrige Last- und/oder Drehzahl) zur Realisierung minimaler Schadstoffemissionen die Soll-Abgasrückführungsrate sowohl stationär als auch instationär möglichst exakt und schnell eingeregelt werden sollte. Im einfach schraffierten Bereich II ist hingegen die schnelle Einregelung des Soll-Ladedrucks die wichtigste Voraussetzung zur Reduzierung der Schwarzrauchemission. Unabhängig von diesen beiden Bereichen ist ein Gesamtbereich in einen oberen Bereich oberhalb eine Bereichsgrenze B und in einem unteren Bereich unterhalb dieser Bereichsgrenze B aufgeteilt, wobei im oberen Bereich keine Abgasregelung erforderlich ist oder durchgeführt wird, während im unteren Bereich eine solche Abgasrückführung sinnvoll ist und daher durchgeführt wird. Die Kennlinie K hat daher für die Abgasregelung als solche keine unmittelbare Bedeutung.

Durch den variablen und einstellbaren Turbinenquerschnitt in der Turbine 14 des Abgasturboladers kann das erforderliche Abgasrückführungs-Fördergefälle bei gegebenem Abgasrückführungs-Strömungsguerschnitt eingestellt werden. Diese Konzept beruht darauf, daß bei Reduzierung des Turbinenguerschnitts der Druck P3 vor der Turbine 14 stärker anwächst im Vergleich zu Druck P2 nach dem Verdichter. Somit löst sich die Abgasrückführung bei Reduzierung des Turbinenquerschnitts über die Leitschaufelverstellung. Ein erster Regler 24 in der elektronischen Regeleinrichtung 23 wirkt auf die Leitschaufelverstellung über das Steuerglied 16 ein und regelt diese. Im Bereich I dient hierbei als Führungsgröße der Luftmassenstrom, der im Luftmassenmesser 17 gemessen wird. Dies führt in diesem ersten Bereich zu einer Abgasrückführungsregelung über die Leitschaufelverstellung. Beim Übergang zum Bereich I in den Bereich II erfolgt eine Umschaltung von der Führungsgröße Luftmassenstrom zur Führungsgröße Ladedruck P2. Somit wird von der Abgasrückführungsregelung auf die Ladedruckregelung umgeschaltet. Folgt wieder ein Übergang in den Bereich I so erfolgt wiederum eine Umstellung auf die Führungsgröße Luftmassenstrom und damit auf die Abgasrückführung. Durch die Hysterese der Kennlinie K wird verhindert, daß in einem Betriebsbereich in der Nähe der Kennlinie K ein ständiges Hin- und Herschalten erfolgt.

Auch außerhalb des Bereichs I wird die Abgasrückführung mit der Führungsgröße Luftmasse bzw. Luftmassenstrom geregelt. Außerhalb des Bereichs I erfolgt diese Regelung mittels eines zweiten Reglers 25, der auf das Stellglied 19 des als Abgasrückführungsventil dienenden Proportionalventils 20 einwirkt. Da sich die Bereiche I und der helle Rückführungsbereich in Figur 2 sehr ähneln, kann bei manchen Auslegungen auch auf den zweiten Regler 25 und das Proportionalventil 20 verzichtet werden.

Ist der zweite Regler 25 und das Proportionalventil 20 vorgesehen, so wird beim Übergang vom Bereich II in den Bereich I folgendes Umschaltkriterium für den Übergang von der Ladedruckregelung (P2) auf die Luftmassenregelung definiert. Wenn das Ansteuertastverhältnis am Stellglied 19 des Proportionalventils 20 größer einem applizierbaren Wert, z.B. 90 % des maximal zulässigen Wertes ist, so wird das Tastverhältnis auf seinen aktuellen Wert eingefroren, d.h. daß Proportionalventil 20 behält seinen aktuellen Stellwert bei. Gelangt nun der erste Regler 24 an seinen Minimalanschlag, ab dem eine weitere Leitschaufelverstellung nicht mehr möglich ist, so wird er abgeschaltet bzw. deaktiviert, und der zweite Regler 25 wird wieder eingeschaltet bzw. aktiviert, um eine Abgasrückführungsregelung aufrechtzuerhalten. Prinzipiell könnte beim Übergang vom Bereich II in den Bereich I das Proportionalventil 20 auch auf einen vorgebbaren Wert eingestellt werden.

Die erfindungsgemäße Vorrichtung ist insbesondere für Dieselmotoren vorgesehen, sie kann jedoch in entsprechender Weise auch auf Otto-Motoren oder andere Motoren angewandt werden.

## Patentansprüche

1. Vorrichtung zur Ladedruckregelung mittels eines Abgasturboladers mit variabel einstellbarem Turbinenquerschnitt und zur Abgasrückführungsregelung bei einer Brennkraftmaschine, insbesondere einem Dieselmotor, mit einem dem Verdichter des Abgasturboladers im Saugrohr vorgeschalteten Luftmassenmesser, mit einer die Abgasleitung mit dem Saugrohr verbindenden Abgasrückführungsleitung, und mit einer in einem ersten niedrigen Last- und/oder Drehzahlbereich die Abgasrückführung und in einem zweiten höheren Last- und/oder Drehzahlbereich den Ladedruck im Saugrohr durch entsprechende Variation des Turbinenquerschnitts regelnden Regeleinrichtung, **dadurch gekennzeichnet, daß** die Regeleinrichtung (23) einen ersten Regler (24) aufweist, der eine Stellgröße zur Variation des Turbinenquerschnitts der Turbine (14) des Abgasturboladers (13) aufweist, wobei die Führungsgröße zur Abgasrückführungsreglung im ersten niedrigen Last- und/oder Drehzahlbereich der Luftmassenstrom im Ansaugrohr (11), und die Führungsgröße zur Ladedruckregelung im zweiten höheren Last- und/oder Drehzahlbereich der Ladedruck (P2) im Ansaugrohr (11) ist.

2. Vorrichtung nach Anspruch 1, **dadurch gekennzeichnet, daß** ein durch einen als Abgasrückführungsregler ausgebildeten zweiten Regler (25) stellbares Abgasrückführungsventil (20) in der Abgasrückführungsleitung (18) vorgesehen ist.

3. Vorrichtung nach Anspruch 2, **dadurch gekennzeichnet, daß** der zweite Regler (25) den Luftmassenstrom als Führungsgröße aufweist.

4. Vorrichtung nach Anspruch 2 oder 3, **dadurch gekennzeichnet, daß** Mittel zum Abschalten oder Deaktivieren des zweiten Reglers (25) beim Übergang vom zweiten in den ersten Lastund/oder Drehzahlbereich vorgesehen sind.

5. Vorrichtung nach Anspruch 4, **dadurch gekennzeichnet, daß** das Abgasrückführungsventil (20) beim Abschalten oder Deaktivieren des zweiten Reglers (25) seinen aktuellen Stellenwert und/oder seinen aktuelles Stellsignal wenigstens dann beibehält, wenn ein vorgebbarer applizierbarer Wert für den Stellwert oder das Stellsignal überschritten ist.

6. Vorrichtung nach Anspruch 4 oder 5, **dadurch gekennzeichnet, daß** Mittel zum Abschalten oder Deaktivieren des ersten Reglers (24) im ersten Last- und/oder Drehzahlbereich bei Erreichen seiner minimalen Stellgröße und zum gleichzeitigen Einschalten oder Aktivieren des zweiten Reglers (25) vorgesehen sind.

7. Vorrichtung nach einem der vorhergehenden Ansprüche, **dadurch gekennzeichnet, daß** Mittel zum Umschalten des ersten Reglers (24) zwischen der Führungsgröße Luftmassenstrom und der Führungsgröße Ladedruck (P2) beim Überschreiten der Grenzlinie zwischen den beiden Last- und/oder Drehzahlbereichen (I bzw. II) vorgesehen sind.

8. Vorrichtung nach einem der vorhergehenden Ansprüche, **dadurch gekennzeichnet, daß** der Luftmassenmesser (17) als Heißfilmluftmassenmesser ausgebildet ist.

9. Vorrichtung nach einem der vorhergehenden Ansprüche, **dadurch gekennzeichnet, daß** die in der Abgasleitung (12) angeordnete Turbine (14) des Abgasturboladers (13) eine Leitschaufelverstelleinrichtung zur Variation des Turbinenquerschnitts aufweist.

10. Vorrichtung nach einem der vorhergehenden Ansprüche, **dadurch gekennzeichnet, daß** dem Verdichter (15) des Abgasturboladers (13) ein Drucksensor (21) zur Messung des Ladedrucks (P2) nachgeschaltet ist.

11. Vorrichtung nach einem der vorhergehenden Ansprüche, **dadurch gekennzeichnet, daß** eine in Abhängigkeit der Motordrehzahl (N) und der Motorlast (P) oder Einspritzmenge bestehende Kennlinie (K) zur Aufteilung in die beiden Last- und/oder Drehzahlbereiche (I, II) vorgesehen ist.

12. Vorrichtung nach Anspruch 11, **dadurch gekennzeichnet, daß** die Kennlinie (K) hysteresebehaftet ist.

## Claims

1. System for controlling charge pressure by means of an exhaust gas turbo-charger with variably adjustable turbine cross-section and for controlling exhaust gas recirculation in an internal combustion engine, in particular a diesel engine, having an air flow sensor connected to the intake pipe upstream of the compressor of the exhaust gas turbo-charger, an exhaust gas recirculation line connecting the exhaust gas line to the intake pipe and a control unit which controls the exhaust gas recirculation in a first low load and/or speed range and controls the charge pressure in the intake line by varying the turbine cross-section accordingly in a second higher load/and or speed range, **characterised in that** the control unit (23) has a first controller (24), which uses a control variable to vary the cross-section of the turbine (14) of the exhaust gas turbo-charger (13), the air flow in the intake pipe (11) being used as the control variable for controlling the exhaust gas recirculation in the first low load and/or speed range and the charge pressure (P2) in the intake pipe (11) being used as the control variable for controlling the charge pressure in the second higher load and/or speed range.

2. System as claimed in claim 1, **characterised in that** an adjustable exhaust gas recirculation valve (20) is provided in the exhaust gas recirculation line (18) as a second controller (25) for controlling exhaust gas recirculation.

3. System as claimed in claim 2, **characterised in that** the second controller (25) uses the air flow as a control variable.

4. System as claimed in claim 2 or 3, **characterised in that** means are provided for shutting down or deactivating the second controller (25) during the transition from the second to the first load and/or speed range.

5. System as claimed in claim 4, **characterised in that** when the second controller (25) is shut down or deactivated, the exhaust gas recirculation valve (20) retains its current control value and/or its current control signal is at least retained if a predeterminable applicable value for the control value or the control signal is exceeded.

6. System as claimed in claim 4 or 5, **characterised in that** means are provided for shutting down or deactivating the first controller (24) in the first load and/or speed range when its minimum control variable is reached and for simultaneously switching on or activating the second controller (25).

7. System as claimed in one of the preceding claims, **characterised in that** means are provided for switching the first controller (24) between the air flow control variable and the charge pressure (P2) control variable when the boundary line between the two load and/or speed ranges (I and II) is exceeded.

8. System as claimed in one of the preceding claims, **characterised in that** the air flow sensor (17) is provided in the form of a hot-film air flow sensor.

9. System as claimed in one of the preceding claims, **characterised in that** the turbine (14) of the exhaust gas turbo-charger (13) disposed in the exhaust gas line (12) has a guide blade adjusting device for varying the turbine cross-section.

10. System as claimed in one of the preceding claims, **characterised in that** a pressure sensor (21) for detecting the charge pressure (P2) is connected downstream of the compressor (15) of the exhaust gas turbo-charger (13).

11. System as claimed in one of the preceding claims, **characterised in that** a characteristic curve (K) correlated to the engine speed (N) and the engine load (P) or injection quantity is provided in order to mark the split between the two load and/or speed ranges (I, II).

12. System as claimed in claim 11, **characterised in that** the characteristic curve (K) has a hysteresis.

## Revendications

1. Dispositif pour le réglage de la pression de charge au moyen d'un turbocompresseur à gaz d'échappement présentant une section de turbine réglable de façon variable et pour le réglage de recirculation des gaz d'échappement d'un moteur à combustion interne, en particulier d'un moteur diesel, comportant un débitmètre d'air branché en amont du compresseur du turbocompresseur à gaz d'échappement dans la tubulure d'aspiration, comportant une conduite de recirculation de gaz d'échappement reliant la conduite à gaz d'échappement à la tubulure d'aspiration, et comportant un système de régulation qui régule la recirculation de gaz d'échappement dans une première plage basse de charge et/ou de vitesse de rotation, et la pression de charge dans la tubulure d'aspiration dans une deuxième plage plus élevée de charge et/ou de vitesse de rotation par variation correspondante de la section de la turbine, **caractérisé en ce que** le système de régulation (23) comprend un premier régulateur (24) qui présente une grandeur pilote pour la variation de la section de la turbine (14) du turbocompresseur à gaz d'échappement (13), la grandeur pilote pour la régulation de recirculation de gaz d'échappement dans la première plage basse de charge et/ou de vitesse de rotation étant le courant massique d'air dans la tubulure d'aspiration (11), et la grandeur pilote pour la régulation de la pression de charge dans la deuxième plage plus élevée de charge et/ou de vitesse de rotation étant la pression de charge (P2) dans la tubulure d'aspiration (11).

2. Dispositif selon la revendication 1, **caractérisé en ce qu'**il est prévu une valve de recirculation de gaz d'échappement (20) dans la conduite de recirculation de gaz d'échappement (18), valve qui est réglable par un deuxième régulateur (25) réalisé sous forme de régulateur de recirculation de gaz d'échappement.

3. Dispositif selon la revendication 2, **caractérisé en ce que** le deuxième régulateur (25) présente le courant massique d'air à titre de grandeur pilote.

4. Dispositif selon l'une ou l'autre des revendications 2 et 3, **caractérisé en ce qu'**il est prévu des moyens pour couper ou désactiver le deuxième régulateur (25) lors de la transition de la deuxième plage vers la première plage de charge et/ou de vitesse de rotation.

5. Dispositif selon la revendication 4, **caractérisé en ce que** lors de la coupure ou de la désactivation du deuxième régulateur (25), la valve de recirculation de gaz d'échappement (20) conserve sa valeur pilote actuelle et/ou son signal pilote actuel au moins lorsqu'une valeur applicable prédéterminée pour la valeur pilote ou pour le signal pilote est dépassée.

6. Dispositif selon l'une ou l'autre des revendications 4 et 5, **caractérisé en ce qu'**il est prévu des moyens pour couper ou désactiver le premier régulateur (24) dans la première plage de charge et/ou de vitesse de rotation lorsque sa grandeur pilote minimale est atteinte, et pour mettre en marche ou activer simultanément le deuxième régulateur (25).

7. Dispositif selon l'une des revendications précédentes, **caractérisé en ce qu'**il est prévu des moyens pour inverser le premier régulateur (24) entre la grandeur pilote qu'est le courant massique d'air et la grandeur pilote qu'est la pression de charge (P2) lorsque la ligne limite entre les deux plages de charge et/ou de vitesse de rotation (I ou II) est dépassée.

8. Dispositif selon l'une des revendications précédentes, **caractérisé en ce que** le débitmètre d'air (17) est réalisé sous forme de débitmètre d'air à film chaud.

9. Dispositif selon l'une des revendications précédentes, **caractérisé en ce que** la turbine (14) du turbocompresseur à gaz d'échappement (13) agencée dans la conduite à gaz d'échappement (12) comprend un système de réglage à aubes directrices pour varier la section de la turbine.

10. Dispositif selon l'une des revendications précédentes, **caractérisé en ce qu'**un détecteur de pression (21) pour mesurer la pression de charge (P2) est agencé en aval du compresseur (15) du turbocompresseur à gaz d'échappement (13).

11. Dispositif selon l'une des revendications précédentes, **caractérisé en ce qu'**il est prévu une courbe caractéristique (K) existant en fonction de la vitesse de rotation (N) du moteur et de la charge (P) du moteur ou en fonction de la quantité injectée pour la subdivision en les deux plages de charge et/ou de vitesse de rotation (I, II).

12. Dispositif selon la revendication 11, **caractérisé en ce que** la courbe caractéristique (K) est affectée d'une hystérésis.
